# EUROPEAN PATENT SPECIFICATION

(11) **EP 0 472 310 B1**
(45) Date of publication and mention of the grant of the patent: **18.12.1996**
(21) Application number: 91307074.4
(22) Date of filing: 01.08.1991
(51) Int. Cl.: A01N 25/30, A01N 25/32, A01N 57/20, B01F 17/00, B01F 17/46

(54) **New surfactant compositions, method for their preparation, and pesticidal compositions containing same**
Neue tenside Zusammensetzungen, Verfahren zu ihrer Herstellung und diese enthaltende pestizide Zusammensetzungen
Compositions tensio-actives nouvelles, méthode pour leur préparation et compositions pesticides les contenants

(30) Priority: 09.08.1990 US 565816
(43) Date of publication of application: 26.02.1992
(60) Divisional application: 95101923.1
(73) Proprietor: MONSANTO COMPANY, St. Louis Missouri 63167 (US)
(72) Inventor: Berger, Paul D., Sugar Land, Texas 77478 (US); Jimenez, Antonio M., Missouri, Texas 77489 (US)
(74) Representative: Bosch, Henry

(56) References cited:
- EP-A- 0 006 348
- EP-A- 0 006 348
- EP-A- 0 290 416
- EP-A- 0 299 654
- GB-A- 2 049 427

## Description

### Background of the Invention

The present invention generally relates to novel aqueous solutions of glyphosate herbicide comprising a surfactant composition having reduced eye irritancy in addition to their herbicidal effectiveness.

Numerous organic pesticides; i.e., chemicals that are useful in the control of bacteria, insects, fungi, weeds and the like, have been developed in recent years. These pesticides, especially herbicides, have found use in agriculture as well as for household applications. Regardless of whether the pesticide is water soluble or water insoluble, it is desirable to use it in an aqueous medium rather than in a non-aqueous solvent which is more difficult to use by the formulator and applicator, could cause environmental damage, is more costly and is in general undesirable. Water dispersions, emulsions and/or solutions can be prepared from most pesticides using selected surfactants. Proper selection of the surfactant can also improve the efficacy of the pesticidal composition.

Surfactants are useful in the preparation of herbicidal compositions whether the herbicide is water soluble or insoluble. When the herbicide is water insoluble, the surfactant can be used to make a water dispersible herbicide composition. When the herbicide is water soluble, the surfactant can often be used to improve the herbicidal effectiveness of the herbicidal composition.

One classification of surfactants that has found success in the preparation of herbicidal compositions are the polyoxyalkylene alkylamines such as, for example, ethoxylated tallowamine. These compounds have the necessary surface activity so that many otherwise water insoluble as well as water soluble herbicides can be formulated into concentrates which will form useful dispersions, emulsions and solutions in water. Herbicides formulated into dispersions, emulsions and solutions using these surfactants have exceptional herbicidal properties.

While the polyoxyalkylene alkylamine compounds have excellent surfactant properties which enhance the efficacy of the toxicant they may also be eye irritants.

Reducing or eliminating the eye irritancy of surfactants used with glyphosate herbicide, without reducing the efficacy of the herbicidal compositions containing the surfactants, is highly desirable. The protection of the applicator and personnel preparing the surfactant and pesticidal compositions is of paramount importance. Reducing the eye irritancy of the surfactant and herbicidal glyphosate compositions containing the surfactant, increases the use that can be made of such products while lessening the possibility of injury to personnel handling and using them.

In order to obtain surfactant compositions having the desired characteristics needed for use with the numerous pesticides on the market, various combinations of surfactants have been previously made.

U.S. Pat. No. 4,313,847 et al. describes three component surfactant compositions including a polyoxyalkylene alkyl or alkylaryl ether phosphate ester, a polyoxyalkylene alkylamine and a material selected from the group consisting of nonionic polyoxylated surfactants, polyhydric alcohol esters and polyoxyalkylene glycols. According to this patent, the three component composition is an improved emulsifier enhancing the use of the emulsion. Reference is also made to EP-0 006 348.

Combinations of emulsifiers are also shown in the following patents: U.S. Pat. No. 2,872,368 discloses a polyoxyethylene glycol or a polyoxypropylene glycol in combination with an oil soluble alkaline earth metal salt of an alkylated naphthalene sulfonic acid; U.S. Pat. No. 3,683,078 discloses emulsifier compositions having three components: 1) the condensation product of an alkylphenol and an alkylene oxide, 2) a sulfonate salt and 3) a polyoxyalkylene derivative of an alkanol and U.S. Pat. No. 3,071,550 discloses selected sulfonates in combination with an aliphatic diester of unsaturated carboxylic acids and the condensation product of glycerine and from about 15 to about 27 moles of ethylene oxide.

As stated in British Patent No. 769,736, due to the diverse nature of pesticides, the selection of the proper emulsifying agent in any particular instance is difficult. This patent shows combinations of a surface active alkylaryl polyoxyalkylene glycol ether and a water soluble salt of a phosphate or sulfate ester of one of the ethers. This British patent, like the preceding patents, shows the continuing need for a multitude of surfactants many obtained by combinations of known materials.

EP-A-0 299 654 relates to compositions suitable for use as compatibility agents and that consist of a glycoside as well as a polyoxyalkylene alkylamine containing 20 moles of alkylene oxide, preferably tallow amine, a polyoxyalkylene alkyl or alkylaryl ether phosphoric acid ester, inter alia, polyoxyethylene(9)-p-nonylphenylphosphoric acid monoester and a glycol. Pesticide formulations are also disclosed.

None of the foregoing patents discusses the problem of surfactants being eye irritants. Yet this is a factor which must be taken into consideration when preparing and using compositions containing surfactants. Thus there exists an important need for surfactants having the desired efficacy and reduced eye irritancy.

Perhaps the most widely used herbicide is glyphosate, N-phosphonomethyl glycine. This product is normally used in an agriculturally acceptable form such as a water soluble salt; e.g. the isopropylamine salt. For commercial use glyphosate is made into a herbicidal composition containing a surfactant, which can then be diluted with water for use by the applicator. Often used surfactants for the preparation of these compositions are the aforementioned polyoxyalkylene alkylamines, especially ethoxylated tallowamine. The polyoxyalkylene alkylamines have been used extensively as surfactants for herbicides, particularly glyphosate containing compounds. EPO Patent Application No 0 290 416 discloses combinations of solubilized glyphosate, equivalent to at least 40 grams per liter of glyphosate acid, and alkoxylated alkyl amine surfactants in a ratio of the solubilized glyphosate (expressed as glyphosate acid equivalent) to amine surfactant of from about 1:1.75 to about 6:1. According to this patent application, its compositions permit a reduction in the surfactant to glyphosate ratio without loss of herbicidal effectiveness. Clearly, the use of compositions containing glyphosate and alkoxylated tallowamine are of importance. The invention described herein presents a method of improving the highly desirable properties of such compositions.

It is therefore an object of the present invention to provide new surfactant compositions that can be used to prepare herbicidal glyphosate solutions particularly aqueous solutions having reduced eye irritancy.

Another object of the present invention is to provide new methods for controlling the growth of weeds.

Other objects of the present invention will become apparent from the following description:

### Summary of the Invention

The present invention is directed to an aqueous solution comprising glyphosate herbicide and a surfactant composition comprising a polyoxyalkylene alkylamine having at least about 7 moles of an alkylene oxide group and reduced eye irritancy. An important embodiment of this invention is a surfactant composition comprising a polyoxyalkylene alkylamine containing at least about 7 moles of a alkylene oxide group and eye irritant reducing compounds such as sulfated polyoxyalkylene alkylphenol; alcohol sulfates; polyoxyalkylene alcohol sulfates; mono- and dialcohol phosphates; mono- and di-(polyoxyalkylene alcohol) phosphates; mono- and di-(polyoxyalkylene alkylphenol) phosphates; polyoxyalkylene alkylphenol carboxylates or polyoxyalkylene alcohol carboxylates, said eye irritant reducing compounds containing up to about 60 moles of an alkylene oxide group and alkyl and alcohol groups having from about 8 to about 20 carbon atoms.

A glycol can be present in the surfactant composition in order to improve the solubility of the surfactant composition. The glycol can be formed in situ during the preparation of the polyoxyalkylene alkylamine or the glycol can be added to the amine or the surfactant composition.

### Detailed Description of the Invention

The surfactant compositions of the present invention comprise a polyoxyalkylene alkylamine having at least about 7 moles of an alkylene oxide group and an eye irritancy reducing amount of a compound such as sulfated polyoxyalkylene alkylphenol; alcohol sulfates and polyoxyalkylene alcohol sulfates; mono- and dialcohol phosphates; mono- and di-(polyoxyalkylene alcohol) phosphates; mono- and di-(polyoxyalkylene alkylphenol) phosphates; polyoxyalkylene alkylphenol carboxylates and polyoxyalkylene alcohol carboxylates, said eye irritant reducing compound containing up to about 60 moles of an alkylene oxide group and alkyl and alcohol groups having from about 8 to about 20 carbon atoms.

In the embodiments using sulfated polyoxyalkylene alkylphenol as the eye irritant reducing compound for the polyoxyalkylene alkylamine, two components of the surfactant composition are polyoxyalkylene derivatives.

Such materials are often referred to as an alkoxylated product or an alkylene oxide product. Often these alkylene oxide products are mixtures of compounds containing different numbers of alkylene oxide groups, of which one predominates, being accompanied by smaller proportions of products containing larger and smaller numbers of the alkylene oxide groups in the polyoxyalkylene portion of the molecule.

The polyoxyalkylene alkylamines are commercially available materials, being used as surfactants for the preparation of pesticidal compositions, particularly herbicidal compositions. These materials can be prepared by reacting an alkylene oxide, preferably ethylene and/or propylene oxide with an alkylamine, preferably an alkylamine containing from 8 to 20 carbon atoms. These amines are generally derived from naturally occurring products such as tallow, coconut, soybean or cotton seed oils and as such are mixtures of amines. A preferred amine is tallowamine. The polyoxyalkylene derivatives are prepared by reacting the alkylene oxide with the alkylamine at elevated temperatures and pressure. Procedures for carrying out these reactions are known to those skilled in the art.

A generalized structural representation of the polyoxyalkylene alkylamines is as follows: 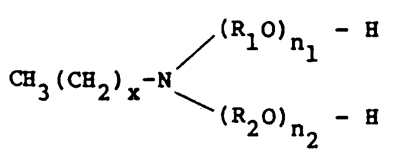 wherein x is a number from 7 to 19; n₁ and n₂ are numbers independently selected from 1 to 30, preferably from 4 to 9, and the sum of n₁ and n₂ is greater than 4; and R₁ and R₂ are independently selected from alkyl, preferably having from 2 to 4 carbon atoms.

The amount of alkylene oxide used in the preparation of this component of the surfactant composition varies with the ultimate use of the surfactant composition. Normally up to 60 moles of oxyalkylene groups in the polyoxyalkylene alkylamine are satisfactory, with from 4 to 20 moles preferred, and from 7 to 8 moles of oxyalkylene groups most preferred.

The sulfated polyoxyalkylene alkylphenol can be prepared by first alkoxylating an alkylphenol and then reacting the alkoxylated alkylphenol with sulfur trioxide. One procedure for its preparation is to contact a mixture of air and sulfur trioxide with the alkoxylated alkylphenol in a falling film reactor. Other procedures that may be used are reactions with oleum or with chlorosulfonic acid. This reaction will cause the formation of sulfate groups on the alkoxylated portion of the molecule and sulfonate groups on the phenol ring. The preparation of the sulfated polyoxyalkylene alkylphenol can produce product having from 0 to 30 or more weight percent sulfonate on its phenol ring. For many purposes it is preferred that there be present at least about 3 weight percent sulfonate in the sulfated polyoxyalkylene alkyl phenol. A generalized structural representation of the predominant component of the sulfated polyoxyalkylene containing ring sulfonation is as follows: 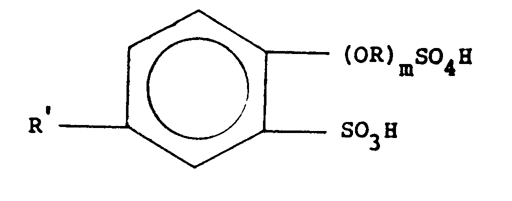 wherein m is a number up to 60, preferably preferably less than 10 and more preferably at least 4 and R is alkyl having from 2 to 4 carbon atoms, preferably 2, and R′ is alkyl having about 8 to 20 carbon atoms, preferably 9 carbon atoms.

The amount of alkylene oxide used in the preparation of this component of the surfactant composition varies with the ultimate use of the surfactant composition. Normally there can be up to about 30 or more moles of alkylene oxide in the sulfated polyoxyalkylene alkylphenol. For certain agricultural application it is preferred to have from 4 to 14 or more moles of the alkylene oxide group. For specific uses it is preferred that there be present less than 10 moles of alkylene oxide groups and preferably 4 moles of alkylene oxide groups, most preferably 4 moles of ethylene oxide in the sulfated polyoxyalkylene alkylphenol.

The alkyl group in the alkylphenol moiety can comprise from 8 to 20 carbon atoms, A preferred alkyl is nonyl due to the availability and properties of surfactants having this moiety. It should be understood that for specific applications, alkylphenol moieties containing more or fewer carbon atoms can be used.

In order to obtain the desired results, the sulfated polyoxyalkylene alkylphenol preferably contains at least 3 weight percent of sulfonate. This component can contain up to 30 weight percent or more of sulfonate. For certain applications sulfated polyoxyalkylene compounds containing 15 weight percent sulfonate can be effectively used in the present surfactant compositions.

Other eye irritant reducing compounds can also be used to reduce the eye irritancy of the polyoxyalkylene alkylamines. Alcohol sulfates and polyoxyalkylene alcohol sulfates having from about 8 to about 18 carbon atoms and up to about 12 moles of alkoxyalkylene group are particularly useful. As with the sulfated polyoxyalkylene alkylphenol and the polyoxyalkylene alkylamines, it is preferred that the alkylene oxide groups in the polyoxyalkylene alcohol sulfates be ethylene oxide groups. Oxyalkylene groups from 2 to 4 carbon atoms are often used. While there can be 30 or more moles of an oxyalkylene group in the polyoxyalkylene alcohol sulfate, polyoxyalkylene alcohol sulfate preferably contains 3 moles of alkylene oxide groups, preferably 3 moles of ethylene oxide groups.

Mono- and dialcohol phosphates; mono- and di-(polyoxyalkylene alcohol) phosphates; mono- and di-(polyoxyalkylene alkylphenol) phosphates; polyoxyalkylene alkylphenol carboxylates and polyoxyalkylene alcohol carboxylates are additional eye irritant reducing compounds that can be used to reduce the eye irritancy of the polyoxyalkylene alkylamines.

These compounds can contain from 8 to 20 carbon atoms in their alkyl and alcohol groups and up to 30 moles of alkylene oxide, preferably ethylene oxide, in each polyoxyalkylene alcohol or polyoxyalkylene phenol group. A with the sulfated polyoxalkylene alkylphenol, it is preferred that the polyoxalkylene alkylphenol phosphates and carboxylates be polyoxyethylene nonylphenol phosphates and polyoxyethylene nonylphenol carboxylates.

These carboxylate and phosphate components are available materials which can be readily prepared by methods known in the art. As one example of such a procedure, the phosphates can be obtained by reacting a suitable poly(alkoxyalkylene) alkylphenol with phosphorus pentoxide or polyphosphoric acid. The selection of the exact components and their amounts depends on the identification of the desired phosphate. By varying the components used in the preparation of the phosphate, it is possible to maximize the presence of mono- or diester. Often the phosphates are mixtures of the mono- and diesters. The preference for the mono- or diester of phosphoric acid depends upon variables such as the ultimate use of the surfactant composition, the identity of the pesticide, the intended use of the pesticide composition and other factors, U.S. Patent No. 4,313,847 describes the preparation of the phosphates.

Certain of the eye irritant reducing components of the present surfactant compositions are commercial materials. For example, nonyl phenol phosphate containing 4 moles of ethylene oxide, C₈-C₁₀ alcohol phosphates and sulfated nonyl phenol containing 4 moles of ethylene oxide have been marketed by Witco Corp. under the names EMPHOS CS-121, EMPHOS PS-400, and WITCONATE D-51-29 respectively. (EMPHOS and WITCONATE are trademarks of Witco Corp.)

In general the surfactant composition comprises a major amount of the polyoxyalkylene alkylamine and an effective amount of the selected eye irritant reducing compound. The eye irritant reducing compound is present in the surfactant composition in an effective amount sufficient to reduce the eye irritant properties of the polyoxyalkylene alkylamine. When the eye irritant reducing compound is a sulfated polyoxyalkylene alkylphenol, preferred surfactant compositions can contain from 50 to 95 weight percent, preferably 80 to 85 weight percent, of the polyoxyalkylene alkylamine and from 5 to 50 weight percent of the eye irritant reducing component. The optimum amount of each component in the surfactant blend depends on variables such as the identity of the eye irritant reducing compound, the type of application of the glyphosate composition, storage and transportation of the surfactant and glyphosate compositions, the conditions of use of the glyphosate composition, etc. When a water soluble salt of glyphosate is used and sulfated polyoxyalkylene alkylphenol is the eye irritant reducing component, it has been found desirable to use a composition which comprises about 85 weight percent of the polyoxyalkylene alkylamine and about 15% by weight of the sulfated polyoxyalkylene alkylphenol. Other ratios may also be useful.

The surfactant composition of the present invention can contain optional components to improve the water solubility of the surfactant composition. The need for such components will depend upon several factors, especially the identity of the surfactants comprising the composition. Among compounds useful for improving the water solubility of the surfactant composition are glycols. Glycols are of particular use for this function due to their solubility in water. The readily available glycols, ethylene glycol, propylene glycol, polyethylene glycol and polypropylene glycol are satisfactory for this function although other glycols can also be used. Other organic compounds with high water solubility will also be useful in certain instances.

While the glycol can be added to the surfactant composition with mixing, its use therein is independent of the method of its introduction into the surfactant composition. Thus, for example, it can be introduced into the surfactant composition with the polyoxyalkylene alkylamine component. This is often a preferred method since the glycol can be made during the manufacture of the polyoxyalkylene alkylamine component as a byproduct of the alkoxylation reaction. Other procedures for obtaining and introducing the optional glycol component can be used.

Most of the individual components discussed above are liquids at room temperature. However, in the case of those materials containing a large polyoxyalkylene chain, some of the materials may be waxy at room temperature and if this is the case, the materials can be heated prior to mixing. The surfactant compositions of the present invention can be prepared by blending the components. Any suitable equipment, such as a conventional mixer, may be used. The order of adding the materials generally is not critical and thus they may be blended in any convenient order. As mentioned above, the amounts of the individual components utilized can be varied somewhat depending upon a variety of factors, particularly the ultimate application of the composition.

Surfactant compositions of the present invention are useful in the preparation of pesticidal compositions, particularly aqueous herbicidal glyphosate solutions.

In general, a herbicidal aqueous concentrate is first prepared. This composition in essence contains glyphosate and surfactant. Often it includes a minor amount of water. The ratio of herbicide to surfactant will depend on many factors, including but not limited to the identity of the components and the ultimate use. Usually the surfactant will comprise from 5 to 25 weight percent of this composition. The concentrate can then be diluted with water to form an aqueous herbicidal solution ready for use. Good results are obtained with the the herbicide glyphosate (N-(phosphonomethyl)glycine) and its water soluble salts. U.S. Patent 3,853,530 discloses the use of glyphosate and its derivatives as herbicides.

Since glyphosate itself has limited water solubility (about 1%) the water soluble salts of glyphosate are normally used for most applications. Among the water soluble salts of glyphosate are the trimethyl sulfonium salt, the ammonium salt, the isopropylamine salt, and the alkali metal salts, such as sodium and potassium. These compounds due to their solubility in water are the agriculturally acceptable glyphosate containing compounds generally used in commerce.

It is possible to use mixtures of glyphosate and one of its water soluble salts. Previously mentioned European Patent Application No. 0 290 416 discloses the use of such mixtures which have the advantage of a higher concentration of glyphosate in the final product. However, the low solubility of the glyphosate limits the amount of it in the total composition. This amount will depend in general on the solubility of the water soluble salt used in the combination.

The relative amounts of herbicide, water and surfactant in the aqueous herbicidal compositions of this invention will vary depending upon many factors including but not limited to the identity and properties of the herbicide, method of application, locus to which the herbicide is applied, etc.

The compositions useful in agriculture and related application can be prepared by adding water to pesticidal compositions comprising the pesticide and the present surfactant. The surfactant and pesticide can be combined using standard equipment for the blending of compositions.

These following examples represent compositions tested to demonstrate the eye irritation properties of the present compositions. All materials contained the isopropylamine salt of glyphosate as the herbicide. Tables 1 and 2 contain the results of these tests. The following test procedure was used in these experiments.

These examples were performed in accordance with Pesticidal Assessment Guidelines, Subdivision F, Hazard Evaluation: Human and Domestic Animals, U.S. Environmental Protection Agency (EPA) Publication, EPA 540/9-82-025, November, 1982. The study was conducted in compliance with EPA Good Laboratory Practice Standards (Federal Register, Vol. 48, November 29, 1983).

In each of these examples an aqueous solution of the isopropylamine salt of glyphosate containing 61.3 weight percent of such glyphosate composition was used as the herbicidal component and is referred to as "glyphosate solution." Polyoxyethylene tallowamine containing from 8 to 9 moles of ethylene oxide groups and 30 weight percent polyethylene glycol was used as a component of the surfactant composition and is referred to as "ethoxylated tallowamine."

Examples 1 and 2 are experiments performed with a glyphosate composition containing ethoxylated tallowamine as its only surfactant component.

### Example 1

Example 1 was performed with a test material prepared by mixing glyphosate solution (69.3 g), ethoxylated tallowamine (13.0 g) and water (17.7 grams).

### Example 2

Example 2 was performed with a test material prepared by mixing glyphosate solution (69.3 g), ethoxylated tallowamine (15.4 g) and water (15.3 grams).

Examples 3-13 are experiments performed with a surfactant composition containing ethoxylated tallowamine and a sulfated ethoxylated nonylphenol.

### Example 3

Example 3 was performed with a test material prepared by mixing glyphosate solution (69.3 g); water (15.3 g) and surfactant composition (15.4 grams) having a pH of 7.5 and containing ethoxylated tallowamine (13.1 g) and sulfated polyoxyethylene nonylphenol (2.2 g) having 4 moles of ethylene oxide groups and about 3 weight percent sulfonate.

### Example 4

Example 4 was performed with a test material prepared by mixing glyphosate solution (69.3 g); water (15.2 g) and surfactant composition (15.4 grams) containing ethoxylated tallowamine (13.5 g) and sulfated polyoxyethylene nonylphenol (1.9 g) having 2 moles of ethylene oxide groups and about 6 weight percent sulfonate.

### Example 5

Example 5 was performed with a test material prepared by mixing glyphosate solution (69.3 g) and surfactant composition (15.4 g) containing ethoxylated tallowamine (13.5 g) and sulfated polyoxyethylene nonylphenol (1.9 g) having 2 moles of ethylene oxide groups and about 15 weight percent sulfonate.

### Example 6

Example 6 was performed with a test material prepared by mixing glyphosate solution (2.94 g), water 96.39 grams and surfactant composition (0.67 g) containing JETCO ethoxylated tallowamine (0.57 g) and sulfated polyethoxyethylene nonylphenol (.10 g) having 4 moles of ethylene oxide groups and about 6 weight percent sulfonate.

### Example 7

Example 7 was prepared by mixing glyphosate solution (2.94 grams), water (96.39 grams) and surfactant composition (0.67 grams) containing ARMAK ethoxylated tallowamine (0.57 grams) and sulfated polyoxyethylene nonylphenol (0.10 grams) having 4 moles of ethylene oxide groups and about 6 weight percent sulfonate.

### Example 8

Example 8 was prepared by mixing glyphosate solution (69.3 g), water (15.3 g) and surfactant composition (15,4 g) containing ethoxylated tallowamine (13.1 g) and sulfated polyoxyethylene nonylphenol (2.3 g) having 4 moles of ethylene oxide groups and about 6 weight percent sulfonate.

### Example 9

Example 9 was prepared by mixing glyphosate solution (69.3 g), water (15.3 g) and surfactant composition (15.4 g) containing ethoxylated tallowamine (13.1 g) and sulfated polyoxyethylene nonylphenol (2.3 g) having 4 moles of ethylene oxide and about 13 weight percent sulfonate.

### Example 10

Example 10 was prepared by mixing a glyphosate solution (69.3 g), water (15.3 g) and a surfactant composition (15.4 g) having a pH of 6.5 containing ethoxylated tallowamine (13.1 g) and sulfated polyoxyethylene nonylphenol (2.3 g) having 4 moles of ethylene oxide and about 85 weight percent sulfonate.

### Example 11

Example 11 was prepared by mixing a glyphosate solution (69.3 g), water (15.3 g) and a surfactant composition (15.4 g) having a pH of 7.1 containing ethoxylated tallowamine (13.8 g) sulfated polyoxyethylene phenol (1.5 g) having 4 moles of ethylene oxide and about 85 weight percent sulfonate.

### Example 12

Example 12 was prepared by mixing a glyphosate solution (69.3 g), water (15.3 g) and a surfactant composition (15.4 g) having a pH of 7 containing ethoxylated tallowamine (13.1 g) and sulfated polyoxethylene nonylphenol (2.3 g) having 10 moles of ethylene oxide groups and about 6 weight percent sulfonate.

### Example 13

Example 13 was prepared by mixing a glyphosate solution (69.3 g), water (15.3 g) and a surfactant composition (15.4 g) containing ethoxylated tallowamine (11.9 g) and sulfated polyoxyethylene nonylphenol (3.5 g) having 10 moles of ethylene oxide groups and about 6 weight percent sulfonate.

Examples 14 and 15 are experiments performed with a surfactant composition containing ethoxylated tallowamine and an alcohol sulfate.

### Example 14

Example 14 was prepared by mixing a glyphosate solution (69.3 g), water (15.3 g) and a surfactant composition (15.4 g) containing ethoxylated tallowamine (13.1 g) and alcohol sulfate (2.3 g) from a mixture of alcohols having from 8 to 10 carbon atoms.

### Example 15

Example 15 was prepared by mixing a glyphosate solution (69.3 g), water (15.3 g) and a surfactant composition (15.4 g) containing ethoxylated tallowamine (13.9 g) and alcohol sulfate (1.5 g) from a mixture of alcohols having from 8 to 10 carbon atoms.

**Table 1**

| Average Irritation Scores (Non-Washed Eyes) | | | | | | | | | | |
|---|---|---|---|---|---|---|---|---|---|---|
| EXAMPLE | 1 hr | DAYS AFTER TREATMENT | | | | | | | | |
| | | 1 | 2 | 3 | 4 | 7 | 10 | 14 | 17 | 21 |
| 1 | 18.0 | 15.2 | 19.0 | 14.0 | 11.8 | 10.5 | 7.0 | 5.3 | 3.8 | 4.0 |
| 2 | 20.7 | 19.3 | 17.2 | 15.3 | 12.3 | 4.7 | 6.3 | 6.5 | 5 | 3.5 |
| 3 | 17.2 | 10.2 | 10.8 | 9.2 | 7.6 | 6.4 | 6.4 | 9.5 | 6.5 | 9 |
| 4 | 15.3 | 21.2 | 13 | 9.2 | 8.2 | 5.3 | 4.3 | 4.5 | 5 | 3.2 |
| 5 | 19 | 19.2 | 10.2 | 6 | 4.3 | 1.7 | 0.7 | 0.7 | 0.7 | 0.3 |
| 6 | 4 | 2.3 | 1 | 0 | 0 | | | | | |
| 7 | 4.7 | 1.7 | 1 | 0 | | | | | | |
| 8 | 12 | 12.7 | 8.6 | 5.2 | 3.6 | 0.8 | 0 | | | |
| 9 | 12 | 14.8 | 8.2 | 5.3 | 4.7 | 1.7 | 0.3 | 0 | | |
| 10 | 17.2 | 8.2 | 6.5 | 4.8 | 3.3 | 1.7 | 0.7 | 0 | | |
| 11 | 17.3 | 10.5 | 7 | 4.7 | 3.7 | 1.3 | 0.7 | 0 | | |
| 12 | 15.8 | 13.8 | 9.7 | 8.3 | 5 | 3 | 2.7 | 1 | 0.3 | 0.3 |
| 13 | 17.7 | 12.3 | 10 | 6 | 4 | 2.3 | 2.3 | 2.2 | 0 | |
| 14 | 12.7 | 2 | 0.7 | 0 | | | | | | |
| 15 | 17.7 | 14.7 | 8.3 | 6.5 | 7.7 | 2.3 | 3.2 | 1.3 | 1.3 | 1.3 |

**Table 2**

| Average Irritation Scores (Washed Eyes) | | | | | | | | | | |
|---|---|---|---|---|---|---|---|---|---|---|
| EXAMPLE | 1 hr | DAYS AFTER TREATMENT | | | | | | | | |
| | | 1 | 2 | 3 | 4 | 7 | 10 | 14 | 17 | 21 |
| 1 | 17.3 | 13.3 | 6.0 | 3.3 | 3.3 | 2.0 | 1.3 | 0.7 | 0.7 | 0.7 |
| 2 | 21 | 17.7 | 13.7 | 11.3 | 8.7 | 4.7 | 4 | 8.7 | 5 | 3.7 |
| 3 | 15 | 10 | 7.3 | 6 | 5.5 | 1.3 | 0.7 | 0 | | |
| 4 | 15 | 6.7 | 4 | 2.7 | 2 | 0 | | | | |
| 5 | 19.7 | 11.7 | 6.7 | 6 | 4.7 | 3.3 | 2 | 1.3 | 0.7 | 0.7 |
| 6 | 11.7 | 4 | 1.3 | 0.7 | 0 | | | | | |
| 7 | 5.3 | 1.3 | 1.3 | 0 | | | | | | |
| 8 | 15 | 6.7 | 5.3 | 4.7 | 3.3 | 0.7 | 0 | | | |
| 9 | 12.7 | 12.7 | 9.3 | 6 | 4 | 2 | 0 | | | |
| 10 | 13.3 | 7.3 | 4.7 | 2.7 | 1.3 | 0.7 | 0 | | | |
| 11 | 12.7 | 6.7 | 4.7 | 4.7 | 3.3 | 2 | 0 | | | |
| 12 | 19.7 | 14 | 10 | 8 | 9 | 5.3 | 4 | 3.7 | 2 | 0 |
| 13 | 19 | 11 | 7.7 | 4.7 | 3.3 | 20.7 | 1.3 | 0 | | |
| 14 | 9.7 | 0.7 | 0 | 0 | | | | | | |
| 15 | 16.3 | 9.3 | 6.0 | 4.0 | 2.0 | 0.7 | 0 | | | |

The test materials were rated and classified into toxicity categories by the following system:

| Rating | Maximum Average Score | Definition |
|---|---|---|
| Non-Irritating | 0.0 - 0.5 | To maintain this category, all scores at the 24-hour reading must be zero; otherwise increase category one level. |
| Practically Non-Irritating | Greater than 0.5 -2.5 | To maintain this category, all scores at the 24-hour reading must be zero; otherwise increase category one level. |
| Minimally Irritating | Greater than 2.5 -15.0 | To maintain this category, all scores at the 72-hour reading must be zero; otherwise increase category one level. |
| Mildly Irritating | Greater than 15.0 -25.0 | To maintain this category, scores at the 7-day reading must be zero; otherwise increase category one level. |
| Moderately Irritating | Greater than 25.0 -50.0 | To maintain this category, scores at the 7-day reading must be less than or equal to 10 for 60% or more of the animals. Also, the 7-day mean score must be less than or equal to 20. If the 7-day mean score is less than or equal to 20, but less than 60% of the animals show scores less than 10, then no animal among those showing scores greater than 10 can exceed a score of 30 if category is to be maintained; otherwise increase category one level. |
| Severely Irritating | Greater than 50.0 -80.0 | To maintain this category, scores at the 7-day reading must be less than or equal to 30 for 60% or more of the animals. Also, the 7-day mean score must be less than or equal to 40. If the 7-day mean score is less than or equal to 40, but less than 60% of the animals show scores less than or equal to 30, then no animal among those showing scores greater than 30 can exceed a score of 60 if category is to be maintained; otherwise increase category one level. |
| Extremely Irritating | Greater than 80.0 -110.0 | |

The category of the test material is not be increased more than one level above its maximum average score.

| CLASSIFICATION OF TEST MATERIAL INTO TOXICITY CATEGORIES | |
|---|---|
| Category | Criteria |
| I | Corrosive (irreversible destruction of ocular tissue) or corneal involvement or conjunctival irritation persisting through Day 21. |
| II | Corneal involvement or conjunctival irritation clearing in 8-21 days. |
| III | Corneal involvement or conjunctival irritation clearing in 7 days or less. |
| IV | Minimal effects clearing in less than 24 hours. |

**Table 3**

| Test Ratings (Non-Washed Eyes) | | |
|---|---|---|
| Example | Rating | Toxicity Category |
| 1 | Moderately Irritating | I |
| 2 | Moderately Irritating | I |
| 3 | Moderately Irritating | I |
| 4 | Moderately Irritating | I |
| 5 | Mildly Irritating | I |
| 6 | Minimally Irritating | III |
| 7 | Minimally Irritating | III |
| 8 | Mildly Irritating | II |
| 9 | Mildly Irritating | II |
| 10 | Moderately Irritating | II |
| 11 | Moderately Irritating | II |
| 12 | Moderately Irritating | I |
| 13 | Moderately Irritating | II |
| 14 | Minimally Irritating | III |
| 15 | Moderately Irritating | I |

**Table 4**

| Test Ratings (Washed Eyes) | | |
|---|---|---|
| Example | Rating | Toxicity Category |
| 1 | Moderately Irritating | I |
| 2 | Moderately Irritating | I |
| 3 | Mildly Irritating | II |
| 4 | Mildly Irritating | III |
| 5 | Mildly Irritating | I |
| 6 | Moderately Irritating | III |
| 7 | Minimally Irritating | III |
| 8 | Mildly Irritating | III |
| 9 | Mildly Irritating | II |
| 10 | Mildly Irritating | II |
| 11 | Mildly Irritating | II |
| 12 | Moderately Irritating | I |
| 13 | Moderately Irritating | II |
| 14 | Minimally Irritating | III |
| 15 | Moderately Irritating | II |

Examples 1 and 2 represent tests performed wherein the surfactant was ethoxylated tallowamine having 7 to 8 moles of ethylene oxide groups. Each of the test materials within the scope of the present invention, i.e. Examples 3-15 demonstrate a reduction of the eye irritancy of the ethoxylated tallowamine.

In order to determine the efficacy of herbicidal compositions containing the present surfactant, the following tests were performed using the isopropylamine salt of glyphosate as the herbicide.

### Example 16

In this experiment, herbicidal compositions of the present invention were compared with a standard glyphosate composition for herbicidal efficacy. In the tests, material A (standard) was a glyphosate composition containing 15.47 weight percent ethoxylated tallowamine having from 7 to 8 mols of ethylene oxide as the surfactant as described in Example 2. Materials B, C and D were glyphosate compositions comprising a surfactant composition containing ethoxylated tallow amine (13.1 grams) and sulfated polyoxyethylene nonylphenol (2.3 grams having 4 moles of ethylene oxide and about 13 weight percent sulfonate as described in Example 9. Material B contained 15.49 weight percent of surfactant, Material C contained 12.57 weight percent of surfactant and Material D contained 10.0 weight percent of surfactant.

The test materials were then diluted with water into 0.5, 1.0, 2.0 and 4.0 weight percent glyphosate aqueous solutions and sprayed onto a test field containing rhizone johnson grass. The test plots were evaluated 7 and 14 days after treatment.

| Percent Control | | | | | | | | |
|---|---|---|---|---|---|---|---|---|
| Test Material | 0.5% | | 1.0% | | 2.0% | | 4.0% | |
| | 7 days | 14 days | 7 days | 14 days | 7 days | 14 days | 7 days | 14 days |
| A | 42 | 82 | 62 | 99 | 67 | 100 | 88 | 100 |
| B | 57 | 90 | 75 | 99 | 68 | 99 | 88 | 100 |
| C | 42 | 97 | 70 | 99 | 73 | 100 | 88 | 100 |
| D | 47 | 95 | 58 | 99 | 73 | 99 | 83 | 100 |

An untreated check plot showed 0% control of the plants.

### Example 17

The test materials described in Example 17 were also applied to a test plot containing as its primary vegetation volunteer wheat, yellow foxtail and prickly sida. Also present in the plots were scattered plants of seedling johnson grass, velvet leaf and common lambs quarter.

All plots were evaluated 7 and 14 days after treatment.

| Percent Control (7 days after treatment - Average of 3 Plots) | | | | | | | |
|---|---|---|---|---|---|---|---|
| Test Material | Rate (Pints/Acre | Volunteer Wheat | Yellow Foxtail | Prickly Sida | Johnson Grass* | Velvet Leaf* | Lambs Quarter* |
| A | 1.0 | 87 | 93 | 72 | 80 | 60 | --- |
| | 1.5 | 95 | 95 | 82 | 90 | 85 | --- |
| | 2.0 | 97 | 98 | 88 | 95 | --- | 95 |
| B | 1.0 | 92 | 93 | 73 | 85 | --- | --- |
| | 1.5 | 98 | 97 | 88 | 87.5 | --- | 95 |
| | 2.0 | 100 | 100 | 95 | 95 | 90 | --- |
| C | 1.0 | 90 | 92 | 82 | 85 | 65 | --- |
| | 1.5 | 97 | 97 | 93 | 92.5 | 80 | --- |
| | 2.0 | 98 | 98 | 93 | 95 | 92.5 | 90 |
| D | 1.0 | 93 | 93 | 90 | --- | 60 | --- |
| | 1.5 | 98 | 97 | 90 | 90 | 90 | --- |
| | 2.0 | 100 | 98 | 93 | 95 | 90 | --- |

| | | | | | | | |
|---|---|---|---|---|---|---|---|
| * Insufficient johnson grass, velvet leaf and lambs quarter plants for complete evaluation. | | | | | | | |

| Percent Control (14 days after treatment - Average of 3 Plots) | | | | | | | |
|---|---|---|---|---|---|---|---|
| Test Material | Rate (Pints/Acre | Volunteer Wheat | Yellow Foxtail | Prickly Sida | Johnson Grass* | Velvet Leaf* | Lambs Quarter* |
| A | 1.0 | 100 | 100 | 95 | 95 | 95 | --- |
| | 1.5 | 100 | 100 | 100 | 100 | 100 | --- |
| | 2.0 | 100 | 100 | 100 | 100 | --- | 100 |
| B | 1.0 | 100 | 100 | 98 | 100 | --- | --- |
| | 1.5 | 100 | 100 | 100 | 100 | --- | 95 |
| | 2.0 | 100 | 100 | 100 | 100 | 100 | --- |
| C | 1.0 | 100 | 100 | 97 | 100 | 80 | --- |
| | 1.5 | 100 | 100 | 98 | 100 | 95 | --- |
| | 2.0 | 100 | 100 | 100 | 100 | 100 | 100 |
| D | 1.0 | 100 | 100 | 98 | --- | 80 | --- |
| | 1.5 | 100 | 100 | 100 | 100 | 100 | --- |
| | 2.0 | 100 | 100 | 100 | 100 | 95 | --- |

| | | | | | | | |
|---|---|---|---|---|---|---|---|
| * Insufficient johnson grass, velvet leaf and lambs quarter plants for complete evaluation. | | | | | | | |

The untreated check plot had 0% control of all test plants.

The foregoing herbicidal test results demonstrate that herbicidal compositions containing the surfactant compositions of the present invention maintain or increase the herbicidal activity of herbicidal compositions containing an alkoxylated alkylamine as the only surfactant.

## Claims

1. An aqueous solution comprising glyphosate herbicide and a surfactant composition comprising a polyoxyalkylene alkylamine containing at least 7 moles of an alkylene oxide group, and an eye irritancy reducing amount of a compound selected from sulfated polyoxyalkylene alkylphenols; alcohol sulfates; polyoxyalkylene alcohol sulfates; mono- and dialcohol phosphates; mono- and di- (polyoxyalkylene alcohol) phosphates; mono- and di- (polyoxyalkylene alkylphenol) phosphates; polyoxyalkylene alkylphenol carboxylates and polyoxyalkylene alcohol carboxylates, said eye irritation reducing compounds containing up to 60 moles of an alkylene oxide group and alkyl and alcohol groups having from 8 to 20 carbon atoms.

2. The aqueous solution of Claim 1 wherein the polyoxyalkylene alkylamine has the chemical structure 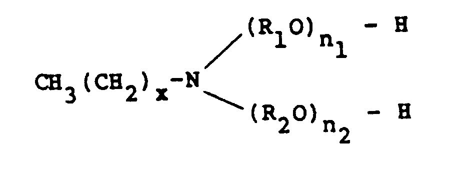 wherein x is a number from 7 to 19; n₁ and n₂ are numbers independently selected from 1 to 30; and the sum of n₁ and n₂ is greater than 4; and R₁ and R₂ are independently selected from alkylene having from 2 to 4 carbon atoms.

3. The aqueous solution of Claim 1 or 2 wherein the polyoxyalkylene alkylamine is a polyoxyethylene tallowamine.

4. The aqueous solution of any of the preceding Claims wherein the polyoxyalkylene alkylamine is a polyoxyethylene tallowamine containing up to 20 moles of ethylene oxide and comprises 80 to 95 weight percent of the surfactant composition.

5. The aqueous solution of any of the preceding Claims wherein an eye irritancy reducing compound is a sulfated polyoxyalkylene alkylphenol having the chemical structure 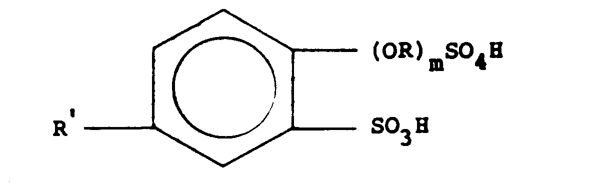 wherein m is number up to 60, and R is alkyl having from 2 to 4 carbon atoms, and R' is alkyl having from 8 to 20 carbon atoms.

6. The aqueous solution of any of Claims 1-4 wherein an eye irritancy reducing compound is selected from mono- and dialcohol phosphates; mono- and di- (polyoxyalkylene alcohol) phosphates; and mono- or di- (polyoxyalkylene alkylphenol) phosphates.

7. A method of controlling the growth of weeds which comprises applying to said weeds an aqueous solution of glyphosate herbicide according to any of the preceding claims.

8. Use of a compound selected from sulfated polyoxyalkylene alkylphenols; alcohol sulfates; polyoxyalkylene alcohol sulfates; mono- and dialcohol phosphates; mono- and di-(polyoxyalkylene alcohol) phosphates; mono- and di-(polyoxyalkylene alkylphenol) phosphates; polyoxyalkylene alkylphenol carboxylates and polyoxyalkylene alcohol carboxylates, said compounds containing up to 60 moles of an alkylene oxide group and alkyl and alcohol groups having from 8 to 20 carbon atoms, to reduce the eye irritancy characteristics of an aqueous glyphosate solution which comprises a polyoxyalkylene alkylamine surfactant containing at least 7 moles of an alkylene oxide group.

## Patentansprüche

1. Wässerige Lösung, umfassend Glyphosat-Herbizid und eine Surfactant-Zusammensetzung, umfassend ein Polyoxyalkylenalkylamin, enthaltend zumindest 7 Mol einer Alkylenoxid-Gruppe, und eine die Augenreizung reduzierende Menge einer Verbindung, ausgewählt aus sulfatierten Polyoxyalkylenalkylphenolen; Alkoholsulfaten; Polyoxyalkylenalkoholsulfaten; Mono- und Dialkoholphosphaten; Mono- und Di-(polyoxyalkylenalkohol)-phosphaten; Mono- und Di-(polyoxyalkylenalkylphenol)-phosphaten; Polyoxyalkylenalkylphenolcarboxylaten und Polyoxyalkylenalkoholcarboxylaten, welche die Augenreizung reduzierenden Verbindungen bis zu 60 Mol einer Alkylenoxid-Gruppe und Alkyl- und Alkohol-Gruppen mit 8 bis 20 Kohlenstoffatomen enthalten.

2. Wässerige Lösung nach Anspruch 1, wobei das Polyoxyalkylenalkylamin die chemische Struktur aufweist: 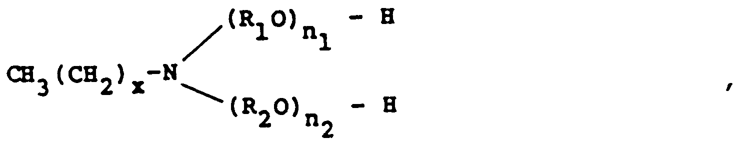 worin x eine Zahl von 7 bis 19 ist; n₁ und n₂ Zahlen, unabhängig ausgewählt aus 1 bis 30, sind; und die Summe von n₁ und n₂ größer ist als 4; und R₁ und R₂ unabhängig ausgewählt sind aus Alkylen mit 2 bis 4 Kohlenstoffatomen.

3. Wässerige Lösung nach Anspruch 1 oder 2, wobei das Polyoxyalkylenalkylamin ein Polyoxyethylentalgamin ist.

4. Wässerige Lösung nach einem der vorhergehenden Ansprüche, wobei das Polyoxyalkylenalkylamin ein Polyoxyethylentalgamin ist, das bis zu 20 Mol Ethylenoxid enthält, und 80 bis 95 Masse-% der Surfactant-Zusammensetzung umfaßt.

5. Wässerige Lösung nach einem der vorhergehenden Ansprüche, wobei eine die Augenreizung reduzierende Verbindung ein sulfatiertes Polyoxyalkylenalkylphenol mit der chemischen Struktur ist: 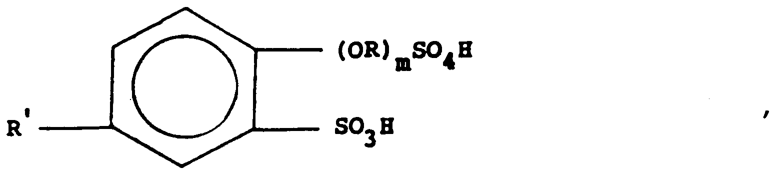 worin m eine Zahl bis zu 60 ist, und R Alkyl mit 2 bis 4 Kohlenstoffatomen bedeutet, und R' Alkyl mit 8 bis 20 Kohlenstoffatomen darstellt.

6. Wässerige Lösung nach einem der Ansprüche 1 bis 4, wobei eine die Augenreizung reduzierende Verbindung ausgewählt ist aus Mono- und Dialkoholphosphaten; Mono- und Di-(polyoxyalkylenalkohol)-phosphaten; und Mono- oder Di-(polyoxyalkylenalkylphenol)-phosphaten.

7. Verfahren zur Bekämpfung des Wachstums von Unkräutern, welches das Aufbringen einer wässerigen Lösung von Glyphosat-Herbizid nach einem der vorhergehenden Ansprüche auf die Unkräuter umfaßt.

8. Verwendung einer Verbindung, ausgewählt aus sulfatierten Polyoxyalkylenalkylphenolen; Alkoholsulfaten; Polyoxyalkylenalkoholsulfaten; Mono- und Dialkoholphosphaten; Mono- und Di-(polyoxyalkylenalkohol)-phosphaten; Mono- und Di-(polyoxyalkylenalkylphenol)-phosphaten; Polyoxyalkylenalkylphenolcarboxylaten und Polyoxyalkylenalkoholcarboxylaten, welche Verbindungen bis zu 60 Mol einer Alkylenoxid-Gruppe und Alkyl- und Alkohol-Gruppen mit 8 bis 20 Kohlenstoffatomen enthalten, bei der Reduzierung der Augenreizungseigenschaften einer wässerigen Glyphosat-Lösung, umfassend ein PolyoxyalkylenalkylaminSurfactant, enthaltend zumindest 7 Mol einer Alkylenoxid-Gruppe.

## Revendications

1. Solution aqueuse comprenant du glyphosate herbicide et une composition tensio-active comprenant une polyoxyalkylènealkylamine contenant au moins 7 moles de groupes oxyde d'alkylène, et une quantité efficace pour réduire le pouvoir irritant pour les yeux d'un composé choisi parmi des polyoxyalkylènealkylphénols transformés en esters sulfuriques; des sulfates d'alcool, des sulfates de polyoxyalkylènealcool; des phosphates de monoalcool et de diol; des phosphates de mono- et de di-(polyoxyalkylènealcool); des phosphates de mono- et de di-(polyoxyalkylènealkylphénol); des carboxylates de polyoxyalkylènealkylphénol et des carboxylates de polyoxyalkylènealcool, lesdits composés diminuant le pouvoir irritant pour les yeux contenant jusqu'à 60 moles de groupes oxyde d'alkylène et les groupes alkyle et alcool ayant de 8 à 20 atomes de carbone.

2. Solution aqueuse selon la revendication 1, dans laquelle la polyoxyalkylènealkylamine présente la structure chimique : 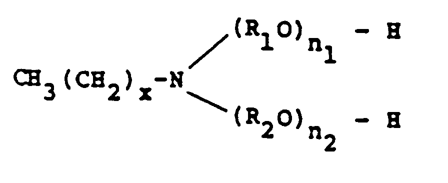 dans laquelle x représente un nombre de 7 à 19, n₁ et n₂ représentent des nombres indépendamment choisis entre 1 et 30; et la somme de n₁ et de n₂ est supérieure à 4; et R₁ et R₂ sont indépendamment choisis parmi des groupes alkylène ayant 2 à 4 atomes de carbone.

3. Solution aqueuse selon la revendication 1 ou 2, dans laquelle la polyoxyalkylènealkylamine est une polyoxyéthylèneamine de suif.

4. Solution aqueuse selon l'une quelconque des revendications précédentes, dans laquelle la polyoxyalkylènealkylamine est une polyoxyéthylèneamine de suif contenant jusqu'à 20 moles de groupes oxyde d'éthylène et représente 80 à 95 pour cent en poids de la composition tensio-active.

5. Solution aqueuse selon l'une quelconque des revendications précédentes, dans laquelle le composé diminuant le pouvoir irritant pour les yeux est un polyoxyalkylènealkylphénol transformé en ester sulfurique présentant la structure chimique : 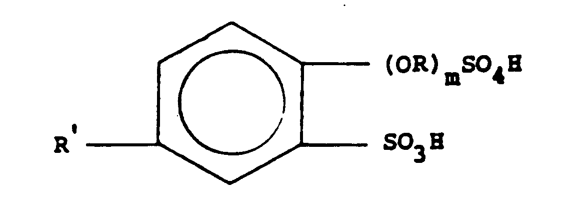 dans laquelle m est un nombre pouvant aller jusqu'à 60, et R représente un groupe alkyle ayant de 2 à 4 atomes de carbone, et R' représente un groupe alkyle ayant de 8 à 20 atomes de carbone.

6. Solution aqueuse selon l'une quelconque des revendications 1 à 4, dans laquelle le composé diminuant le pouvoir irritant pour les yeux est choisi parmi des phosphates de monoalcool et de diol; des phosphates de mono- et de di-(polyoxyalkylènealcool); et des phosphates de mono- ou de di-(polyoxyalkylènealkylphénol).

7. Procédé de lutte contre la croissance des mauvaises herbes qui comprend l'application auxdites mauvaises herbes d'une solution aqueuse de glyphosate herbicide selon l'une quelconque des revendications précédentes.

8. Utilisation d'un composé choisi parmi des polyoxyalkylènealkylphénols transformés en esters sulfuriques; des sulfates d'alcool; des sulfates de polyoxyalkylènealcool; des phosphates de monoalcool et de diol; des phosphates de mono- et de di-(polyoxyalkylènealcool); des phosphates de mono- et de di-(polyoxyalkylènealkylphénol); des carboxylates de polyoxyalkylènealkylphénol et des carboxylates de polyoxyalkylènealcool, lesdits composés contenant jusqu'à 60 moles de groupes oxyde d'alkylène et les groupes alkyle et alcool ayant de 8 à 20 atomes de carbone, pour diminuer les propriétés irritantes pour les yeux d'une solution aqueuse de glyphosate qui comprend comme agent tensio-actif une polyoxyalkylènealkylamine contenant au moins 7 moles de groupes oxyde d'alkylène.
